# EUROPÄISCHE PATENTSCHRIFT

(11) **EP 0 960 779 B1**
(45) Veröffentlichungstag und Bekanntmachung des Hinweises auf die Patenterteilung: **04.04.2001**
(21) Anmeldenummer: 98109444.4
(22) Anmeldetag: 25.05.1998
(51) Int. Cl.: B60R 9/00

(54) **Dachträger**
Roof rack
Galerie de toit

(43) Veröffentlichungstag der Anmeldung: 01.12.1999
(73) Patentinhaber: Dura Convertible Systems GmbH, 50735 Köln (DE)
(72) Erfinder: Farland, David Mac, Dipl.-Ing., 85716 Unterschleissheim (DE)
(74) Vertreter: Strobel, Wolfgang, Dipl.-Ing.

(56) Entgegenhaltungen:
- DE-A- 3 520 132
- DE-A- 3 739 364
- PATENT ABSTRACTS OF JAPAN vol. 016, no. 214 (M-1251), 20. Mai 1992 & JP 04 039141 A (KANTO AUTO WORKS LTD), 10. Februar 1992

## Beschreibung

Die vorliegende Erfindung betrifft einen Dachträger für ein Personenkraftfahrzeug, insbesondere ein Cabriolet, nach dem Oberbegriff des Anspruchs 1.

Dachträger zur Aufnahme verschiedener Gegenstände, wie beispielsweise Gepäck, Dachboxen, Fahrräder, Surfbretter, Skier, etc. sind seit langem bekannt. In der Regel bestehen herkömmliche Dachträger aus Rahmengestängen, die am Dach des Kraftfahrzeugs befestigt werden und starr und lösbar mit dem Fahrzeug verbunden werden.

Bei Cabriolets tritt die Schwierigkeit auf, daß diese ein Faltverdeck oder ein faltbares Hardtop aufweisen, an dem der Dachträger gegebenenfalls befestigt werden muß. Eine Lösung hierzu will die DE 39 25 389 C2 vorschlagen, gemäß der in dem Verdeckstoff Öffnungen ausgebildet sind, durch die ein über dem Faltverdeck angeordneter Träger mit dem vorderen und dem hinteren Spriegel (Querspriegel bzw. Hauptspriegel) verbindbar ist. Dieser Lösungsvorschlag weist jedoch mehrere Nachteile auf. Die Montage durch derartige Öffnungen der entsprechenden Anlenkstellen des Dachträgers gestaltet sich in der Regel schwierig. Zudem müssen die Öffnungen im Faltverdeck entsprechend abgedichtet werden, was wiederum zu aufwendigen Dichtungseinrichtungen führt. Dabei ist deren dauerhafte Dichtungswirkung nicht immer gewährleistet. Der Hauptnachteil dieser Lösung liegt insbesondere jedoch darin, daß der Dachträger nur bei geschlossenem Verdeck des Fahrzeugs montiert werden kann. Das beim Cabriolet gewünschte offene Fahren ist somit zusammen mit dem Dachträger nicht möglich.

Um die offene Fahrweise des Cabriolets auch bei montiertem Dachträger zu ermöglichen, wird gemäß der gattungsbildenden DE 35 20 132 vorgeschlagen, daß der Dachträger mit den Vorderstützen über eine Schnellverriegelungsvorrichtung lösbar verbunden ist und über die Hinterstützen über eine horizontale Schwenkachse nach oben aufklappbar am Heckteil befestig ist. Eine ähnliche Lösung wird auch in der DE 37 39 364 A1 angegeben, gemäß der der gesamte Dachträger um die Lagerung des hinteren Stützabschnitts am Heck des Fahrzeugs komplett schwenkbar ist.

Auch diese vorgeschlagenen Lösungen weisen erhebliche Nachteile auf. Neben der umständlichen Handhabung, nämlich der kompletten Verschwenkung des Dachträgers nach hinten und wieder zurück, ergibt sich insbesondere der Nachteil, daß keinerlei Lasten auf dem Dachträger gelagert werden dürfen, wenn dieser entsprechend hin- und hergeschwenkt werden soll. Denn aufgrund der erheblichen Hebelwirkung besteht die Gefahr des Ausreißens der Lagerstelle bzw. die Gefahr des Verbiegens des Dachträgers, sofern dieser nicht extrem steif ausgebildet ist, was wiederum eine erheblich aufwendigere Gestaltung mit entsprechend höherem Gewicht und höheren Kosten bedeutet. Die profilierten Streben herkömmlicher Dachträger sind für die Abstützkraft ausgelegt, so daß sie entsprechend entgegengesetzt wirkende Kräfte nicht aufnehmen können.

Zudem ist auch das komplette Verschwenken des Dachträgers von vorne nach hinten und zurück bei montierter Last aufgrund des großen Schwenkradius kaum handhabbar.

Der vorliegenden Erfindung liegt deshalb die Aufgabe zugrunde, einen Dachträger zu schaffen, der so ausgestaltet ist, daß er ein Öffnen und Schließen des Fahrzeugdaches (Hardtop oder Faltverdeck) ermöglicht, ohne daß eine Teildemontage des Dachträgers notwendig ist.

Diese Aufgabe wird durch die Merkmale des Anspruchs 1 gelöst.

Dadurch wird erreicht, daß ein Verschwenken des Dachträgers um den vorderen Stützabschnitt ermöglicht wird, so daß der notwendige für das Ein- und Ausfahren des Daches benötigte Raum freigegeben wird, wobei der Dachträger stets am Fahrzeug montiert verbleibt.

Erfindungsgemäß kann der Dachträger somit vorteilhafterweise von einer Betriebsstellung, in der er zur Aufnahme von Dachlasten vorgesehen ist, in eine Öffnungsstellung verschwenkt werden. Dies hat den weiteren großen Vorteil, daß zumindest nicht allzu auskragende Lasten auf dem Dachträger beim Verschwenken verbleiben können, was den erheblichen Vorteil eines schnellen Öffnens bzw. in der Regel bei einsetzendem Regen des Verschließens des Cabrioletdaches ermöglicht.

Vorteilhafterweise ist jede Stützstrebe des hinteren Stützabschnitts mit dem Trägerabschnitt gelenkig verbunden. Dies führt zu einem einfachen Aufbau und zu einem platzsparenden Verschwenken des Dachträgers.

Vorteilhafterweise ist jede Gelenkstrebe in einem Gehäuse in der Betriebsstellung im wesentlichen horizontal angeordnet, wodurch nicht nur ein einwandfreier Lagerungssitz des hinteren Stützabschnitts geschaffen wird, sondern auch, da das Gehäuse vorteilhafterweise im Heck des Fahrzeugs angeordnet ist, eine entsprechend ästhetisch anspruchsvolle Ausgestaltung bzw. Anbringung des erfindungsgemäßen Dachträgers ermöglicht wird.

Zur Ausbildung einer stabilen Dachträgerstruktur weist der Trägerabschnitt vorteilhafterweise wenigstens zwei Längsstreben, die sich im wesentlichen in Fahrzeuglängsrichtung erstrecken und wenigstens zwei hierzu im wesentlichen senk recht verlaufende Querstreben auf.

Vorteilhafterweise sind die Querstreben teleskopartig ausgebildet. Dies hat einerseits den Vorteil, daß der Dachträger ohne weiteres an die jeweilige Dachbreite eines Cabriolets verschiedener Hersteller anpaßbar ist. Andererseits ergibt sich dadurch der Vorteil, daß die Breite des Dachträgers erheblich verringert werden kann, was seinen Transport erheblich erleichtert und seinen benötigen Stauraum für seine Aufbewahrung separat vom Fahrzeug erheblich reduziert.

Mit weiterem großen Vorteil schließen die Stützstreben und die Gelenkstreben in Öffnungsstellung einen Winkel von größer als 180° ein und schaffen damit eine Totpunktlage. Dies dient insbesondere zur Sicherheit gegen ein ungewolltes Rückschwenken des Dachträgers aus der Öffnungsstellung heraus und schafft eine definierte Endlage der Öffnungsstellung. Diese ist etwas niedriger als die maximale Hochschwenkstellung. Die Wegbegrenzung der Streben wird mittels geeigneter Anschläge erreicht.

Weiterhin kann ein flexibles Abdeckelement von einer Querstrebe zur anderen ausziehbar und an der anderen fixierbar sein, was den Vorteil beispielsweise eines Sonnenschutzes schafft, bei sonst geöffnetem Verdeck.

Weitere Einzelheiten, Merkmale und Vorteile der vorliegenden Erfindung ergeben sich aus der nachfolgenden Beschreibung unter Bezugnahme auf die Zeichnungen. Darin zeigt:
- Figur 1: eine perspektivische Ansicht eines als Cabriolet ausgebildeten Personenkraftwagens von links oben hinten mit geschlossenem Verdeck und montiertem erfindungsgemäßem Dachträger;
- Figur 2: das Kraftfahrzeug von Figur 1 mit geöffnetem Verdeck, montiertem Dachträger und ausgefahrenem Sonnenschutz;
- Figur 2a: eine vergrößerte perspektivische Teilschnittansicht der Lagerstelle zwischen Gelenkstrebe und Fahrzeug;
- Figur 3: das Kraftfahrzeug in Seitenansicht mit geschlossenem Verdeck und Dachträger, der sich in einer teilweise geöffneten Stellung befindet;
- Figur 4: das Personenkraftfahrzeug mit geschlossenem Verdeck in Seitenansicht mit vollständig geöffnetem Dachträger, wobei sich der hintere Stützabschnitt in seiner Totpunktlage befindet;
- Figur 5: den Personenkraftwagen in Seitenansicht mit Dachträgerstellung gemäß Figur 4 in einem ersten Stadium des Versenkens des Verdecks des Fahrzeugs;
- Figur 6: eine Ansicht analog zu Figur 5, wobei sich das Verdeck in einer weiter eingezogenen Stellung befindet;
- Figur 7: eine analoge Ansicht zu Figur 6, wobei sich das Verdeck in einer fast vollständig versenkten Stellung befindet;
- Figur 8: eine Ansicht des Personenkraftwagens mit Dachträger in Totpunktstellung des hinteren Stützabschnitts, wobei das Verdeck vollständig versenkt ist und die Heckabdeckung zurückgeschwenkt ist;
- Figur 9: eine Seitenansicht des Kraftfahrzeugs analog zu Figur 8, wobei eine weitere Abdeckung zum Schließen des Verdeckaufnahmeraums in eine Schließstellung verschwenkt wird;
- Figur 10: eine Seitenansicht eines Kraftfahrzeugs mit versenktem Verdeck und geschlossenem Versenkraum, wobei der Dachträger sich in einer halb geöffneten Stellung befindet;
- Figur 11: eine Ansicht analog zu Figur 10, jedoch mit sich in Betriebsstellung befindendem Dachträger;
- Figur 12: eine Seitenansicht eines Kraftfahrzeugs mit geschlossenem Verdeck und Dachträger in Betriebsstellung auf den ein Surfbrett montiert ist.

Nachfolgend wird nunmehr detailliert auf die Zeichnungen eingegangen. In den Figuren sind dabei gleiche Elemente mit gleichen Bezugsziffern versehen.

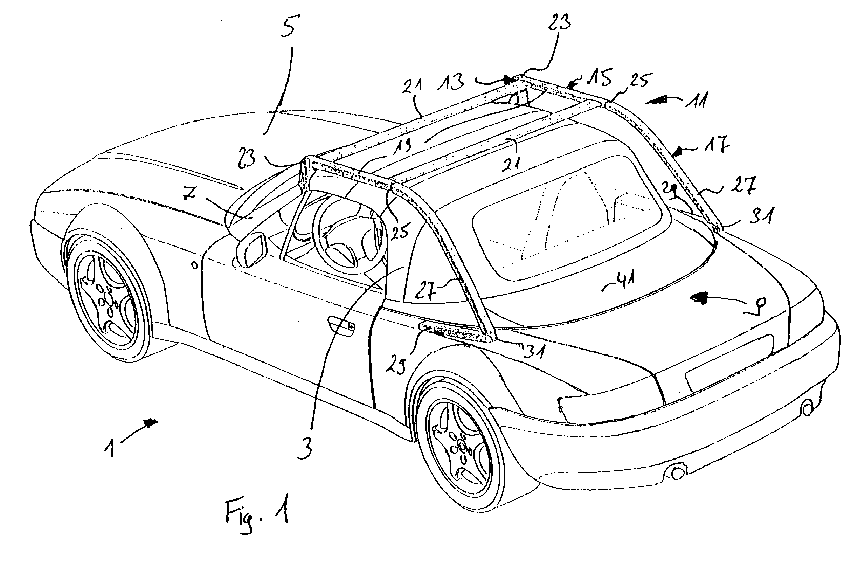

In Figur 1 ist ein als Cabriolet ausgebildetes Personenkraftfahrzeug 1 von hinten links oben in perspektivischer Ansicht dargestellt. Das Cabriolet 1 weist ein Verdeck 3 auf, das im in Figur 1 dargestellten Beispiel geschlossen ist.

Das Cabriolet weist in üblicher Weise einen Frontbereich 5, eine A-Säule 7 und einen Heckbereich 9 auf. Auf dem Cabriolet 1 ist ein erfindungsgemäßer Dachträger 11 montiert, der sich im dargestellten Falle in seiner Betriebsstellung befindet. Der Dachträger 11 weist einen vorderen Stützabschnitt 13 auf, der mit der A-Säule 7 verbunden ist. Der vordere Stützabschnitt 13 ist mit einem Trägerabschnitt 15 verbunden, der sich im wesentlichen oberhalb der Fahrgastzelle erstreckt. Der Trägerabschnitt 15 ist mit einem hinteren Stützabschnitt 17 verbunden, der seinerseits mit dem Heckbereich 9 verbunden ist.

Der Trägerabschnitt 15 weist zwei Längsstreben 19 und zwei Querstreben 21 auf. Die Querstreben 21 verbinden die beiden Längsstreben 19, die sich ihrerseits an der weitest außen befindlichen Position erstrecken, die von dem Stützabschnitt 17 in Verbindung mit der A-Säule 7 möglich ist.

Der Trägerabschnitt 15 ist mittels geeigneten Gelenkeinrichtungen 23 mit dem vorderen Stützabschnitt 13 gelenkig verbunden. Weiterhin ist der Trägerabschnitt 15 mit dem hinteren Stützabschnitt 17 gelenkig bei 25 verbunden. Der hintere Stützabschnitt 17 weist zwei Stützstreben 27 und zwei Gelenkstreben 29 auf. Jede Stützstrebe 27 ist mit einer Gelenkstrebe 29 mittels eines Gelenks 31 gelenkig verbunden. An ihrem anderen Ende ist jede Gelenkstrebe 29 gelenkig mit dem Heckbereich 9 verbunden.

In Figur 2 ist in analoger Ansicht zu Figur 1 das Cabriolet 1 mit offenem Verdeck dargestellt und der Dachträger 11 befindet sich wiederum in seiner Betriebsstellung. Wie aus Figur 2 ersichtlich, befindet sich zwischen den beiden Querstreben 21 ein Abdeckelement 33, das im wesentlichen als Sonnenschutzelement ausgebildet ist. Es kann beispielsweise in einer der Querstreben 21 aufgerollt sein und aus dieser herausziebar und an der anderen Querstrebe fixierbar sein.

In Figur 2a ist vergrößert und in perspektivischer Ansicht eine Ausführungsform einer Gelenkanordnung 35 der Gelenkstreben 29 dargestellt. Die Gelenkanordnung 35 ist mit dem Heckbereich 9 des Kraftfahrzeugs 1 verbunden, wobei mittels eines Gelenkzapfens 37 eine einfache Verbindungseinrichtung geschaffen wird, die eine einfache und leicht handzuhabende Verbindungseinrichtung zwischen dem Dachträger 11 und dem Heckbereich 9 des Fahrzeugs 1 bildet. Dadurch kann der hintere Stützabschnitt 17 einfach und schnell mit dem Heckbereich 9 verbunden werden bzw. wieder gelöst werden. Die Gelenkanordnung 35 weist weiterhin ein Führungselement 39 der Gelenkstrebe 29 auf, die im dargestellten Beispielsfalle U-förmig ausgebildet ist. Die Gelenkstrebe 29 wird somit auf einfache Weise auf das Führungselement 39 aufgesteckt und durch den Gelenkzapfen 37 befestigt. In dem Ausführungsbeispiel gemäß Figur 2a ist die Gelenkstrebe rohrförmig ausgebildet.

Unter Bezugnahme auf die Figuren 3 bis 11 wird nachfolgend der Mechanismus des Versenkens des Verdecks 3 im Zusammenhang mit der Öffnung des Dachträgers 11 beschrieben. Wie ersichtlich, werden die Gelenkstreben 29 aus der Betriebsstellung gemäß Figur 1 und 2 nach oben um die Gelenkanordnung 35 geschwenkt. Gleichzeitig verschwenken die Streben 27 und der Trägerabschnitt 15 ebenfalls nach oben, wobei der Dachträger 11 stets mit dem Fahrzeug 1 verbunden bleibt.

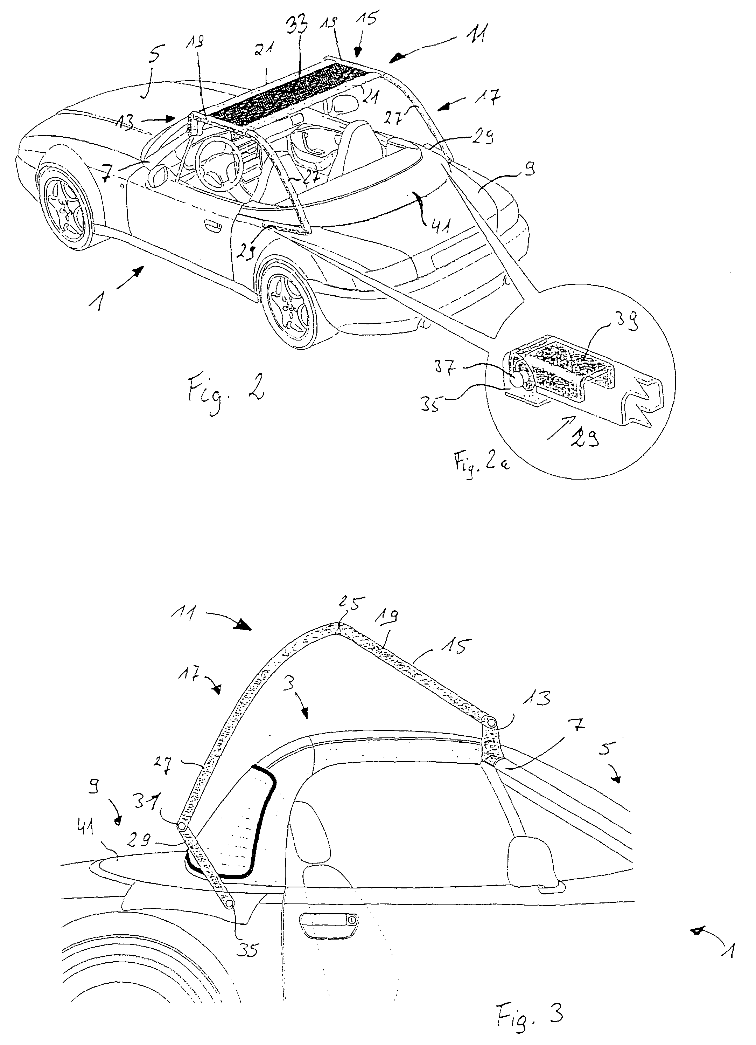

Nachdem in Betriebsstellung gemäß Figur 1 und 2 die Gelenkstreben 29 mit den Stützstreben 27 einen spitzen Winkel einnehmen, wird der Winkel entsprechend vergrößert und erreicht, wie in Figur 4 dargestellt, eine maximale Größe, die größer als 180° ist und die Totpunktlage darstellt. In dieser Lage bleibt der Dachträger 11 arretiert, d. h. die Gelenkstreben 29 schwenken nicht weiter in Richtung des Frontbereichs 5 des Fahrzeugs 1.

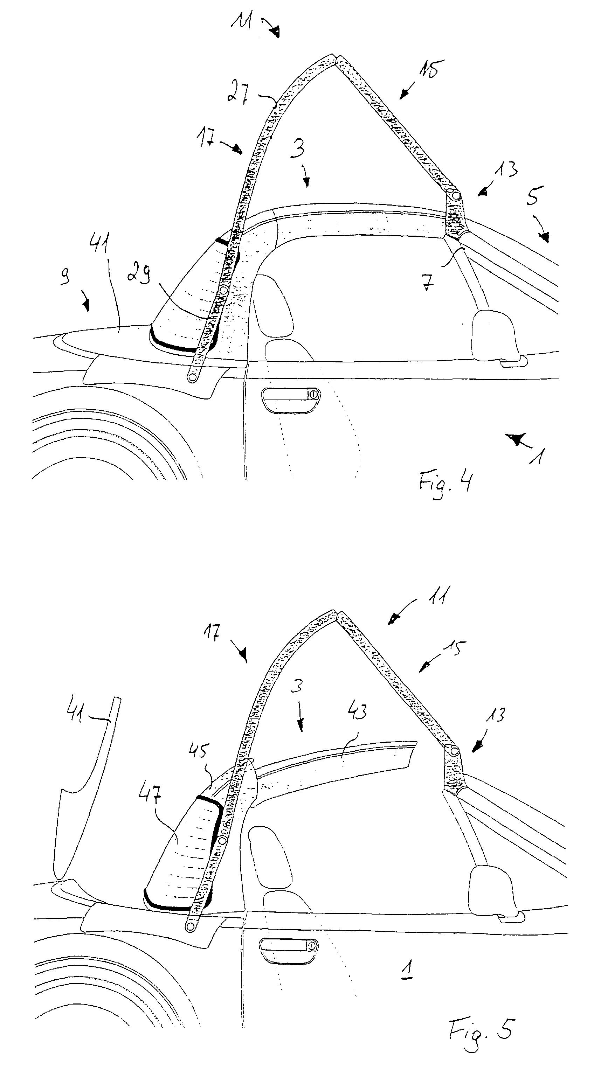

Hinter dem Verdeck 3 ist eine schalenförmige Abdeckung 41 vorgesehen, die zu Beginn des Versenkvorgangs des Verdecks 3 nach oben verschwenkt wird, wie in Figur 5 dargestellt. In Figur 5 ist der Dachträger 11 weiterhin in seiner Totpunktlage bzw. Öffnungsstellung dargestellt und die schalenartige Abdeckung 41 ist nach oben verschwenkt.

Das Verdeck 3 ist, wie aus Figur 5 deutlich hervorgeht, aus zwei Abschnitten aufgebaut, einem oberen Dachabschnitt 43 und einem hinteren Seitenabschnitt 45. Der hintere Seitenabschnitt 45 weist ein Heckfenster 47 auf.

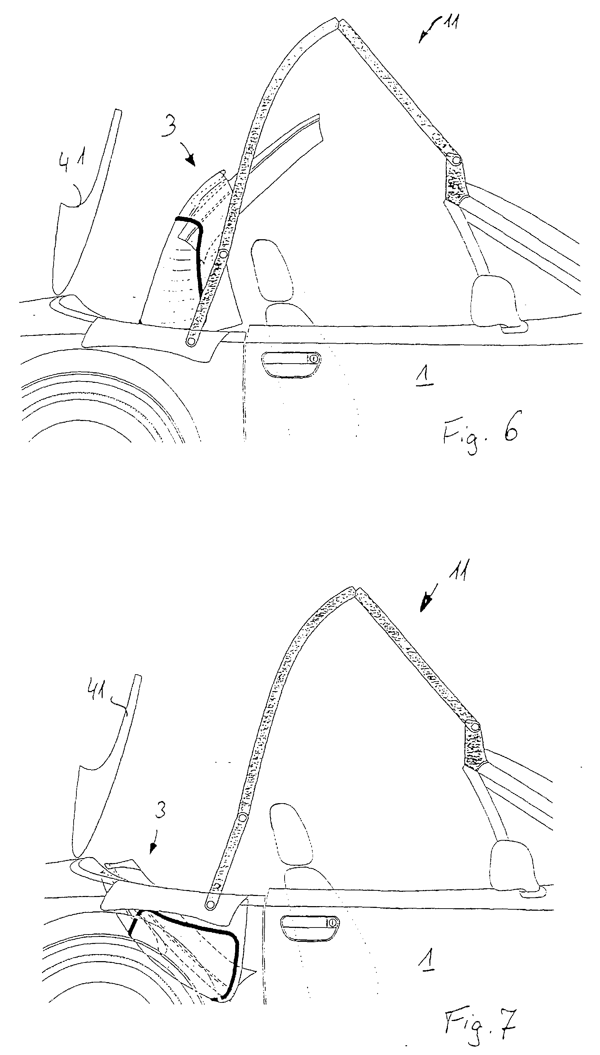

In Figur 6 ist eine nächste Stellung des Verdecks 3 während deren Versenkens dargestellt, wobei der Dachträger 11 sich weiterhin in seiner Öffnungsstellung befindet.

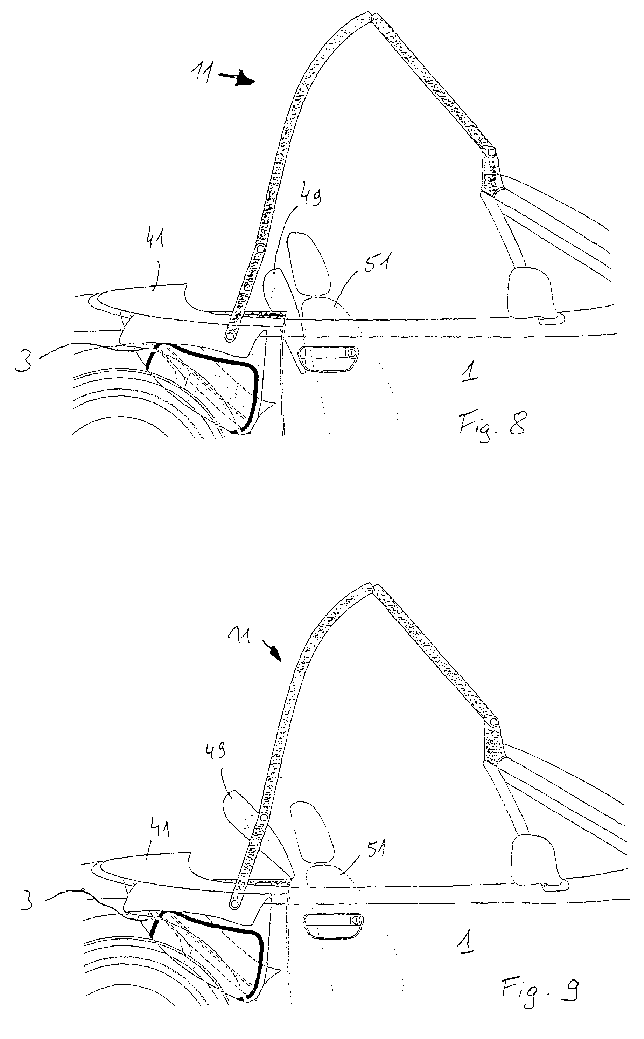

In Figur 7 ist schematisch die Versenkposition des Verdecks 3 dargestellt, die nahezu ihre Endstellung erreicht hat. Der Dachträger 11 befindet sich weiterhin in seiner Öffnungsstellung und die Abdeckung 41 ist ebenfalls weiterhin geöffnet.

In Figur 8 ist die vollständige Versenklage des Verdecks 3 dargestellt, und die Abdeckung 41 ist bereits wieder in ihre Abdeckposition zurückgeschwenkt. Der Dachträger 11 befindet sich weiterhin in seiner Öffnungsstellung, die gleichzeitig seine Totpunktlage ist, und ein vorderes Abdeckelement 49 befindet sich hinter dem Sitz 51 des Fahrzeugs 1.

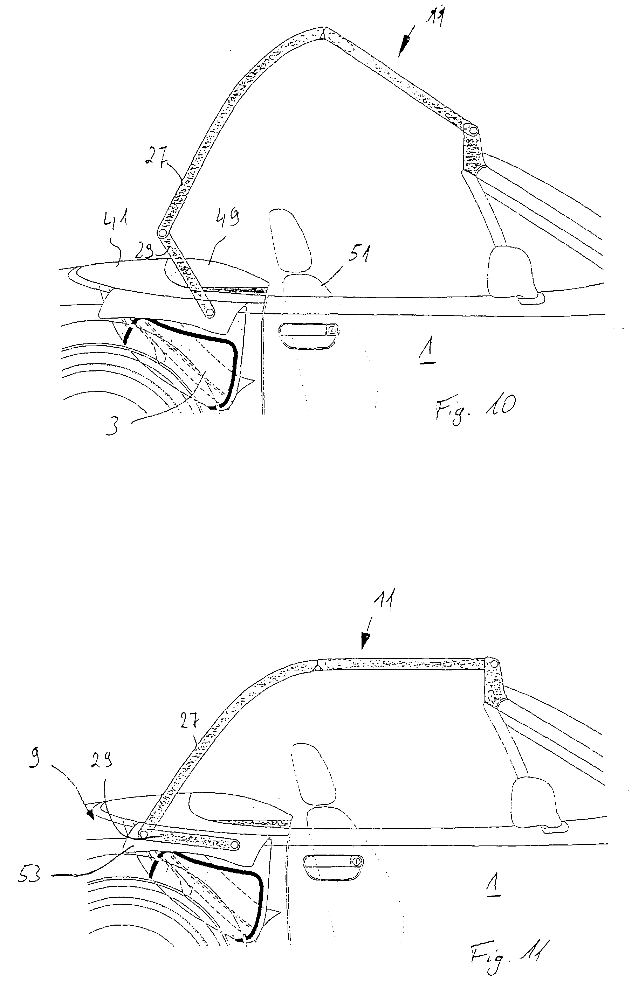

In Figur 9 ist das vordere Abdeckelement aus seiner Lage gemäß Figur 8 nach oben versetzt dargestellt, wonach es weiter verschwenkt wird, um eine vollständige Abdeckung des Aufnahmeraumes des Verdecks 3 zu bilden, wie dies in Figur 10 dargestellt ist. Der Dachträger 11 befindet sich in einer Rückschwenklage aus seiner Öffnungsstellung in seine Betriebsstellung, d. h. zwischen den Stützstreben 27 und den Gelenkstreben 29 ist der Winkel kleiner als 180°.

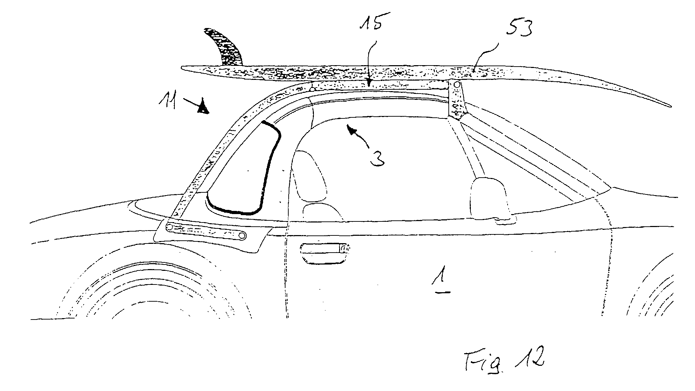

In Figur 11 ist der Dachträger 11 wieder in seine Betriebsstellung zurückgeschwenkt, d. h., daß die Gelenkstreben 29 sich wieder in nahezu horizontaler Lage befinden und der Winkel zwischen den Gelenkstreben 29 und den Stützstreben 27 seinen geringsten Wert hat. Wie weiterhin ersichtlich, befinden sich die Gelenkstreben 29 in einem Gehäuse 53 unterhalb der Oberfläche des Heckbereichs 9 und sind damit verdeckt angeordnet.

In Figur 12 ist der Dachträger 11 in seiner Betriebsstellung auf dem Fahrzeug 1 dargestellt, wobei im dargestellten Beispielsfall das Verdeck 3 geschlossen ist. Der Dachträger 11 stützt ein Surfbrett 53 ab, und ist somit beladen.

Mit der vorliegenden Erfindung wird somit ein besonders einfach aufgebauter Dachträger geschaffen, der es ermöglicht, mittels einfachen Handgriffen und ohne den Dachträger vom Fahrzeug zu lösen, Dachelemente, beispielsweise das Verdeck eines Cabriolets, zu versenken bzw. wieder zu schließen. Dabei ist der erfindungsgemäße Dachträger nicht nur für komplett versenkbare Verdecke von Cabriolets geeignet, sondern auch für Fahrzeuge, bei denen nur Teile des Daches, beispielsweise eines Fahrzeugs in "Targa"-Ausführung entfernt werden sollen bzw. wieder angebracht werden sollen.

Die vorliegende Erfindung ist nicht auf die beispielhaft dargestellten Ausführungsformen beschränkt. Insbesondere können geeignete Antriebseinrichtungen vorgesehen werden, die das Anheben und Absenken des Dachträgers 11 motorisch bewegen können. Damit kann mit besonderem Vorteil erreicht werden, daß allein durch Betätigen bestimmter Bedienungsknöpfe der Dachträger einschließlich Dachlast angehoben wird, das Verdeck geöffnet oder geschlossen wird und der Dachträger wieder in seine Betriebsstellung abgesenkt wird. Die aufgezeigte Lösung bietet somit einen gegenüber dem bisherigen Stand der Technik erheblichen Vorteil.

## Patentansprüche

1. Dachträger für ein Personenkraftfahrzeug (1), insbesondere ein Cabriolet mit einem vorderen Stützabschnitt (13), der zur Abstützung des Dachträgers (11) auf der A-Säule (7) des Fahrzeugs (1) dient, einem mit dem vorderen Stützabschnitt (13) verbundenen Trägerabschnitt (15), und einem hinteren Stützabschnitt (17), der zum Abstützen des Dachträgers (11) am Heck (9) des Fahrzeugs (1) dient und mit dem Trägerabschnitt (15) verbunden ist, dadurch gekennzeichnet, daß der hintere Stützabschnitt (17) zwei Stützstreben (27) und zwei Gelenkstreben (29) aufweist, daß jede Stützstrebe (27) mit einer zugeordneten Gelenkstrebe (29) gelenkig (31) verbunden ist, daß jede Gelenkstrebe (29) an ihrem freien Ende mit dem Kraftfahrzeug (1) gelenkig (35) verbindbar ist, und daß der Trägerabschnitt (15) mit dem vorderen Stützabschnitt (13) gelenkig (23) verbunden ist.

2. Dachträger nach Anspruch 1, dadurch gekennzeichnet, daß er von einer Betriebsstellung in eine Öffnungsstellung verschwenkbar ist.

3. Dachträger nach Anspruch 1 oder 2, dadurch gekennzeichnet, daß jede Stützstrebe (27) mit dem Trägerabschnitt (15) gelenkig (25) verbunden ist.

4. Dachträger nach einem der Ansprüche 1 bis 3, dadurch gekennzeichnet, daß jede Gelenkstrebe (23) in einem Gehäuse (53) in der Betriebsstellung im wesentlichen horizontal angeordnet ist.

5. Dachträger nach einem der Ansprüche 1 bis 4, dadurch gekennzeichnet, daß der Trägerabschnitt (15) wenigstens zwei Längsstreben (19) und wenigstens zwei Querstreben (21) aufweist.

6. Dachträger nach Anspruch 5, dadurch gekennzeichnet, daß die Querstreben (21) teleskopartig ausgebildet sind.

7. Dachträger nach einem der Ansprüche 1 bis 6, dadurch gekennzeichnet, daß die Stützstreben (27) und die Gelenkstreben (29) in Öffnungsstellung einen Winkel von etwas größer als 180° einschließen.

8. Dachträger nach einem der Ansprüche 5 bis 7, dadurch gekennzeichnet, daß ein flexibles Abdeckelement (33) von einer Querstrebe (21) zur anderen ausziehbar und an der anderen fixierbar ist.

## Claims

1. A roof rack for a passenger car (1), particularly a convertible, comprising a front supporting portion (13) for supporting the roof rack (11) on the A-column (7) of the vehicle (1), a rack portion (15) connected to the front support portion (13) and a rear support portion (17) for supporting the roof rack (11) at the rear (9) of the vehicle (1) and connected to the rack portion (15), characterised in that the rear support portion (17) has two supporting struts (27) and two articulated struts (29), each supporting strut (27) is pivotably (31) connected to an associated articulated strut (29), the free end of each articulated strut (29) is pivotably (35) connectable to the vehicle (1), and the rack portion (15) is pivotably (23) connected to the front support portion (13).

2. A roof rack according to claim 1, characterised in that it can be swung from an operating position into an open position.

3. A roof rack according to claim 1 or 2,
characterised in that each supporting strut (27) is pivotably (25) connected to the rack portion (15).

4. A roof rack according to any of claims 1 to 3,
characterised in that each articulated strut (23) is disposed in a casing (23) and is substantially horizontal in the operating position.

5. A roof rack according to any of claims 1 to 4,
characterised in that the rack portion (15) has at least two longitudinal struts (19) and at least two transverse struts (21).

6. A roof rack according to claim 5, characterised in that the transverse struts (21) are telescopic.

7. A roof rack according to any of claims 1 to 6,
characterised in that the supporting struts (27) and the articulated struts (29) include an angle somewhat greater than 180° when in the open position.

8. A roof rack according to any of claims 5 to 7,
characterised in that a flexible cover element (33) can be pulled out from one transverse strut (21) and fixed to the other strut.

## Revendications

1. Galerie de toit, pour véhicule automobile de tourisme (1), notamment cabriolet, comprenant une section d'appui avant (13), qui sert à l'appui de la galerie de toit (11) sur le montant A (7) du véhicule (1), une section de galerie (15), reliée à la section d'appui avant (13), et une section d'appui arrière (17) qui sert à l'appui de la galerie de toit (11) sur la partie arrière de carrosserie (9) du véhicule (1) et est reliée à la section de galerie (15), caractérisée en ce que la section d'appui arrière (17) comprend deux barres d'appui (27) et deux barres d'articulation (29), en ce que chaque barre d'appui (27) est reliée d'une manière articulée (31) à une barre d'articulation (29) associée, en ce que chaque barre d'articulation (29) peut être reliée d'une manière articulée (35), à son extrémité avant, au véhicule automobile (1) et en ce que la section de galerie (15) est reliée d'une manière articulée (23) à la section d'appui avant (13).

2. Galerie de toit suivant la revendication 1, caractérisée en ce qu'il est possible de la faire basculer d'une position de service jusque dans une position d'ouverture.

3. Galerie de toit suivant la revendication 1 ou 2, caractérisée en ce que chaque barre d'appui (27) est reliée d'une manière articulée (25) à la section de galerie (15).

4. Galerie de toit suivant l'une des revendications 1 à 3, caractérisée en ce que, dans la position de service, chaque barre d'articulation (29) est disposée d'une manière essentiellement horizontale dans un boîtier (53).

5. Galerie de toit suivant l'une des revendications 1 à 4, caractérisée en ce que la section de galerie (15) comporte au moins deux barres longitudinales (19) et au moins deux barres transversales (21).

6. Galerie de toit suivant la revendication 5, caractérisée en ce que les barres transversales (21) sont réalisées d'une manière télescopique.

7. Galerie de toit suivant l'une des revendications 1 à 6, caractérisée en ce qu'en position d'ouverture, les barres d'appui (27) et les barres d'articulation (29) font un angle quelque peu supérieur à 180°.

8. Galerie de toit suivant l'une des revendications 5 à 7, caractérisée en ce qu'un élément de couverture (33) souple peut être déployé d'une barre transversale (21) à l'autre et être fixé sur cette autre.
